# EUROPÄISCHE PATENTSCHRIFT

(11) **EP 2 013 534 B1**
(45) Veröffentlichungstag und Bekanntmachung des Hinweises auf die Patenterteilung: **12.10.2011**
(21) Anmeldenummer: 07724470.5
(22) Anmeldetag: 23.04.2007
(51) Int. Cl.: F21S 8/00, F21V 21/30, F16M 11/18

(54) **UMSCHALTGETRIEBE ZUM VERSTELLEN EINES MIT EINEM HALTEBÜGEL VERBUNDENEN SCHEINWERFERS**
ADJUSTING GEAR MECHANISM FOR THE ADJUSTMENT OF A SPOTLIGHT CONNECTED TO A MOUNTING BRACKET
CORRECTEUR DE RAPPORT POUR DÉPLACER UN PHARE RELIÉ À UN ÉTRIER DE FIXATION

(30) Priorität: 21.04.2006 DE 202006006715 U
(43) Veröffentlichungstag der Anmeldung: 14.01.2009
(73) Patentinhaber: Arnold & Richter Cine Technik GmbH & Co. Betriebs KG, 80799 München (DE)
(72) Erfinder: STEGMAIER, Klaus-Dieter, 94234 Viechtach (DE); JONISCHKEIT, Michael, 855567 Alxing (DE); SCHMIDT, Stefan, 85661 Forstinning (DE)
(74) Vertreter: Ninnemann, Detlef
(86) Internationale Anmeldenummer: PCT/EP2007/003540
(87) Internationale Veröffentlichungsnummer: WO 2007/121965

(56) Entgegenhaltungen:
- EP-A- 1 048 522
- DE-B- 1 130 387
- DE-U1- 8 913 868
- FR-A- 481 328
- GB-A- 847 531
- US-A- 5 140 507

## Beschreibung

Die Erfindung betrifft ein Umschaltgetriebe zum Verstellen eines mit einem Haltebügel verbundenen Scheinwerfers gemäß dem Oberbegriff des Anspruchs 1.

Haltebügel dienen zur Verbindung von Scheinwerfern für Beleuchtungszwecke, insbesondere von Studio-, Fernseh-, Theater-, Event-Scheinwerfern und dergleichen, mit einem Rigg für eine hängende Anordnung und mit einem Traggestell oder Stativ für eine stehende Anordnung eines Scheinwerfers, dessen Gehäuse mit den an den Enden der Haltebügelarme angeordneten Aufnahmen des Haltebügels verbunden wird. Eine in der Symmetrieachse des Haltebügels angeordnete vertikale Achse wird mit dem Rigg oder Stativ verbunden und dient als Schwenkachse, um die der Scheinwerfer in der Horizontalen verschwenkbar ist. Die Aufnahmen an den Enden der Haltebügelarme bilden eine horizontale Achse, um die der Scheinwerfer geneigt bzw. gekippt werden kann.

Um ein bequemes und exaktes Schwenken eines Scheinwerfers um die vertikale Schwenkachse oder Kippen um die horizontale Neigeachse auch bei einer erhöhten Anordnung des Scheinwerfers an einem Rigg zu ermöglichen, sind aus der DE 1 130 387 A auf die Schwenkachse und die Kippachse des Scheinwerfers einwirkende Einstellvorrichtungen mit Schneckenrädern bekannt, die über ein kardanisches Zwischenstück mit biegsamen Wellen verbunden sind, an deren Enden Bolzen mit mehrkantigen, mutternartigen Endstücken angeordnet sind, in die ein mit einer Betätigungsstange verbundener Mutternschlüssel zur Fernbedienung der Schwenk- und Neigefunktion des Scheinwerfers eingesteckt werden kann.

Das Einhängen des mit der Betätigungsstange verbundenen Mutternschlüssels in getrennte Einstellvorrichtungen zum Schwenken und Neigen des Scheinwerfers ist insbesondere bei größeren Entfernungen des Scheinwerfers vom Boden mit erheblichem Zeitaufwand verbunden.

Um den Zeitaufwand beim Schwenken und Neigen eines Scheinwerfers um eine vertikale und horizontale Achse zu reduzieren, ist aus der DE 89 13 868 U1 eine einzige Einstellvorrichtung sowohl zum Schwenken eines Scheinwerfers um eine vertikale Achse als auch zum Neigen des Scheinwerfers um eine horizontale Achse bekannt, so dass das zeitraubende Umhängen einer Betätigungsstange in verschiedene Einstellvorrichtungen zum Auslösen der Schwenk- und der Neigefunktion entfällt. Diese Einstellvorrichtung enthält eine mit der Betätigungsstange verbindbare Schaltstange eines Schaltgetriebes, an dessen Schaltstufen die beiden Verstelleinrichtungen zum Schwenken und Neigen des Scheinwerfers bzw. des den Scheinwerfer aufnehmenden Haltebügels angeschlossen sind. Die in einem Getriebegehäuse axial verschieblich und drehbar gelagerte Schaltstange ist mit einem Zahnrad verbunden, erstreckt sich beiderseitig über das Getriebegehäuse hinaus und weist Anschläge zur Festlegung zweier axialer Endstellungen auf. Eine zwischen einem der Anschläge der Schaltstange und dem Getriebegehäuse angeordnete Schraubenfeder bewirkt eine Vorspannung der Schaltstange in eine der beiden axialen Endstellungen, in der das mit der Schaltstange verbundene Zahnrad mit einer Gegenverzahnung der einen Verstelleinrichtung kämmt. Durch axiales Verstellen der Schaltstange entgegen der Vorspannung wird das mit der Schaltstange verbundene Zahnrad in Eingriff mit einer Gegenverzahnung der anderen Verstelleinrichtung gebracht.

Da die Achsen der Verstelleinrichtungen parallel zueinander und parallel zur Schaltstange angeordnet sind, erfordert das Getriebegehäuse ein erhebliches Volumen, um die verschiedenen Getriebeelemente der Verstelleinrichtungen innerhalb des Getriebegehäuses anzuordnen.

Ein weiteres Problem des bekannten Schaltgetriebes besteht darin, dass der Verzahnungseingriff des mit der Schaltstange verbundenen Zahnrades in die Gegenverzahnungen der beiden Verstelleinrichtungen nur in den jeweiligen Endstellungen der axial verschiebbaren Schaltstange sichergestellt ist, in Zwischenstellungen jedoch nur ein teilweiser Verzahnungseingriff mit entsprechend hohen Flächenpressungen bei der Übertragung der Verstellkräfte erfolgt und bei ungünstiger Positionierung der miteinander kämmenden Zahnräder ein Verzahnungseingriff nur dann möglich ist, wenn das mit der Schaltstange verbundene Zahnrad verdreht wird bis ein Zahn des einen Zahnrads auf eine Zahnlücke des anderen Zahnrads trifft. Diese Probleme des bekannten Schaltgetriebes führen zu einem vorzeitigen Verschleiß des Schaltgetriebes und erfordern eine feinfühlige und ggf. zeitaufwendige Bedienung.

Aufgabe der vorliegenden Erfindung ist es, ein Umschaltgetriebe der eingangs genannten Art anzugeben, das nur einen geringen Platz- oder Raumbedarf aufweist, einfach und sicher handhabbar ist und sich durch eine hohe Lebensdauer auszeichnet.

Diese Aufgabe wird erfindungsgemäß mit den Merkmalen des Anspruchs 1 gelöst.

Die erfindungsgemäße Lösung stellt ein Umschaltgetriebe zum Schwenken und Neigen eines mit einem Haltebügels verbundenen Scheinwerfers bereit, das einen nur geringen Platz- oder Raumbedarf aufweist, einfach und sicher zu handhaben ist und nahezu verschleißfrei ist und eine dementsprechend große Lebensdauer hat.

Durch die axial zueinander fluchtende Anordnung der Antriebsachse, der Kupplung und der mit der Kupplung koppelbaren Teile der Schwenk- und Neigeeinrichtung können sämtliche Teile des Umschaltgetriebes ineinander verschachtelt werden, so dass nur ein geringer Raum zur Aufnahme des Umschaltgetriebes benötigt wird. Aufgrund des axial gerichteten Kraftflusses vom Antrieb zu den mit der Schwenkeinrichtung und der Neigeeinrichtung verbundenen Abtrieben ist eine sichere Kraftübertragung gewährleistet, so dass bei einer formschlüssigen Kopplung der Getriebeteile ein optimaler Formschluss sichergestellt ist und insbesondere bei entsprechender Gestaltung der Formschlussteile eine Zahn-auf-Zahn-Stellung vermieden wird, die eine zeitaufwendige Bedienung zur Herstellung des Formschlusses vermeidet.

In bevorzugter Ausführungsform greifen die Kupplungselemente und Gegen-Kupplungselemente der Kupplung formschlüssig ineinander und sind kreisscheibenförmig mit axial ausgerichtetem Klauen-, Keilwellen-, Kerbverzahnungs-, Stirnverzahnungs-, polygonem Vielkant-, Passfederprofil oder mit einem Reibbelag ausgebildet.

Die koaxiale Anordnung der Kupplungselemente und Gegen-Kupplungselemente sowie deren formschlüssiger Verzahnungseingriff mit axial ausgerichteten Formschlusselementen stellt einen Verzahnungseingriff in jeder Drehstellung des Antriebs sicher und gewährleistet einen linearen Kraftfluss vom Antrieb über die Kupplung zur Schwenk- oder Neigeeinrichtung. Durch die Formgebung der Formschlusselemente der Kupplungs- und Gegen-Kupplungselemente ist zudem gewährleistet, dass auch bei einer Zahn-auf-Zahn-Stellung der einander gegenüber stehenden Formschlusselemente ein Hineingleiten der Formschlusselemente in den Formschluss erfolgen kann.

Vorzugsweise sind erste und zweite Gegen-Kupplungselemente an den einander zugewandten Enden einer ersten, mit der Schwenkeinrichtung verbundenen Kupplungshülse und einer zweiten, mit der Neigeeinrichtung verbundenen Kupplungshülse angeordnet, deren axial verlaufende Bohrungen die Antriebsachse aufnehmen, wobei insbesondere die Antriebsachse durch die Bohrung der zweiten, mit der Neigeeinrichtung verbundenen Kupplungshülse gesteckt und in der Bohrung der ersten, mit der Schwenkeinrichtung verbundenen Kupplungshülse abgestützt ist.

Die Ausbildung der Gegen-Kupplungselemente an den Enden zweier mit der Schwenkeinrichtung bzw. mit der Neigeeinrichtung verbundener Kupplungshülsen, durch deren Bohrung die Antriebsachse gesteckt bzw. in deren Bohrung die Antriebsachse geführt ist, ist eine raumsparende Anordnung und eine exakte Führung der Antriebsachse über ihre gesamte Länge gewährleistet, so dass auch bei einer Ausübung von Querkräften auf die Antriebsachse kein Verbiegen der Antriebsachse möglich und somit ein sicheres Umschalten von einer Verstellung der Schwenkeinrichtung in eine Verstellung der Neigeeinrichtung gewährleistet ist.

Durch die Vorspannung der Kupplung auf eine der beiden Verstelleinrichtungen, insbesondere auf einen Eingriff der Kupplungselemente und Gegen-Kupplungselemente der Schwenkeinrichtung ist eine definierte Stellung des Umschaltgetriebes gewährleistet und damit eine einfache Bedienung möglich, da der Scheinwerfer häufiger um die vertikale Achse verschwenkt als gegenüber der horizontalen Achse geneigt wird.

Vorzugsweise wird die Vorspannung der Kupplung und/oder der Antriebsachse mittels einer Vorspannfeder erzeugt, die an einer die Kupplung umgebenden Kupplungsbuchse und an den Kupplungselementen abgestützt ist.

Die Anordnung einer koaxialen Vorspannfeder und deren Abstützung an den Kupplungselementen und einer die Kupplung umgebenden Kupplungsbuchse dient ebenfalls der Raum sparenden Ausgestaltung des Umschaltgetriebes und gewährleistet eine axial und damit in Richtung des Abtriebs gerichtete Vorspannkraft.

Um bei einer Vorspannung der Kupplung auf eine der beiden Verstelleinrichtungen das Ausüben einer ständigen Druck- oder Zugkraft auf die Antriebsachse zum Betätigen der Verstelleinrichtung zu vermeiden, auf die die Kupplung nicht vorgespannt ist, ist in einer vorteilhaften Ausgestaltung der Erfindung die Antriebsachse mit einem Rastmechanismus verbunden, der die Antriebsachse in einer ersten axialen Stellung, in der das erste Kupplungselement mit dem ersten Gegen-Kupplungselement gekoppelt ist, und in einer zweiten axialen Stellung, in der das zweite Kupplungselement mit dem zweiten Gegen-Kupplungselement gekoppelt ist, fixiert.

Mit Hilfe des Rastmechanismus werden definierte Stellungen vorgegeben, in denen entweder die ersten Kupplungselemente und Gegen-Kupplungselemente für die Schwenkeinrichtung oder die zweiten Kupplungselemente oder Gegen-Kupplungselemente für die Neigeeinrichtung in Eingriff sind, so dass die Schwenk- oder Neigeeinrichtung betätigt werden kann. Diese definierten Stellungen werden eingehalten und ein sicherer wechselseitiger Eingriff der Kupplungselemente und Gegen-Kupplungselemente unabhängig davon gewährleistet, ob die Kupplung auf die Schwenk- oder Neigeeinrichtung vorgespannt ist. Bei einer Vorspannung der Kupplung auf die eine oder andere Verstelleinrichtung wird sichergestellt, dass während der Betätigung der Verstelleinrichtung, auf die die Kupplung nicht vorgespannt ist, keine Zug- oder Druckkraft entgegen der Vorspannung aufgebracht werden muss, so dass die eigentliche Betätigung beider Verstelleinrichtungen nach der jeweiligen Aktivierung wesentlich erleichtert wird.

In einer ersten Ausführungsvariante enthält der Rastmechanismus einen radial vorgespannten und radial ausgerichteten Raststift, der in eine von zwei axial zueinander versetzte Raststiftaufnahmen eingreift, wobei die Raststiftaufnahmen vorzugsweise aus um die Antriebsachse umlaufende Nuten bestehen, die axial durch einen Trennsteg voneinander getrennt sind.

Bei dieser ersten Variante des Rastmechanismus wird durch Ausüben einer axial auf die Antriebsachse ausgeübten Druck- und Zugkraft ein Wechsel der Raststellungen vorgenommen, so dass anschließend entweder die Schwenkeinrichtung oder die Neigeeinrichtung betätigt werden kann. Durch die spezielle Ausgestaltung dieser Variante des Rastmechanismus ist ein sicheres Einrasten in die jeweilige axiale Stellung gewährleistet, so dass für die anschließende Betätigung der Schwenk- oder Neigeeinrichtung das ausschließliche Aufbringen eines Drehmoments auf die Antriebsachse genügt.

In einer zweiten Variante legt der Rastmechanismus zum axialen Verstellen der Antriebsachse die Antriebsachse durch Ausüben entweder nur einer Zugkraft oder nur einer Druckkraft abwechselnd in der ersten oder zweiten axialen Stellung fest.

In dieser Variante ist der Rastmechanismus so ausgelegt, dass bei einem Wechsel der zu betätigenden Verstelleinrichtung nicht abwechselnd eine Zugkraft und eine Druckkraft auf die Antriebsachse ausgeübt werden muss, sondern für einen Wechsel der axialen Stellung der Antriebsachse ausschließlich entweder nur eine Zugkraft oder nur eine Druckkraft auf die Antriebsachse auszuüben ist. Diese Ausgestaltung des Rastmechanismus führt zu einer weiteren Erleichterung der Betätigung des Umschaltgetriebes da die Bedienungsperson zu einem Wechsel der Verstelleinrichtung nur in einer Richtung eine axiale Kraft auf die Antriebsachse ausüben muss, so dass Fehlbetätigungen durch Ausüben einer axialen Verstellkraft auf die Antriebsachse in der falschen Richtung vermieden werden.

Vorzugsweise besteht die zweite Variante des Rastmechanismus aus einer Kugelmechanik nach Art und Funktion einer Kugelschreibermechanik.

Eine derartige Kugelmechanik bewirkt einen Wechsel der axialen Stellung der Antriebsachse bei Ausübung einer Verstellkraft auf die Antriebsachse in nur einer Richtung, beispielsweise durch Aufbringen einer Zugkraft auf die Antriebsachse. Eine derartige Kugelmechanik ist einfach und funktionssicher aufgebaut.

Die Kugelmechanik kann entweder mittels Zusatzelementen oder durch eine entsprechende Ausgestaltung der Antriebsachse und des die Antriebsachse umgebenden Gehäuseabschnitts realisiert werden.

In Verbindung mit Zusatzelementen enthält die Kugelmechanik ein mit der Antriebsachse verbundenes Rastelement mit einer herzförmigen Leitkurven-Aussparung, eine gehäusefeste Hülse mit einer umlaufenden Innenaussparung und eine in der herzförmigen Leitkurven-Aussparung des Rastelements und der umlaufenden Innenaussparung der gehäusefesten Hülse geführte Kugel.

Werden die Funktionselemente der Kugelmechanik an der Antriebsachse und dem die Antriebsachse umgebenden Gehäuseabschnitt ausgebildet, besteht die Kugelmechanik aus einer an der Antriebsachse ausgebildeten, herzförmigen Leitkurven-Aussparung einer in einem die Antriebsachse aufnehmenden Gehäuseabschnitt ausgebildeten, umlaufenden Innenaussparung und einer in der herzförmigen Leitkurven-Aussparung und der umlaufenden Innenaussparung geführten Kugel.

In bevorzugter Ausführungsform ist die Antriebsachse entgegen einer auf die Antriebsachse ausgeübten Zugkraft vorgespannt.

In dieser bevorzugten Ausführungsform erfolgt ein Wechsel der zu betätigenden Verstelleinrichtung durch alleiniges Ausüben einer Zugkraft auf die Antriebsachse. Diese Ausführungsform erweist sich als besonders vorteilhaft, weil üblicherweise eine Betätigungsstange in das mit der Antriebsachse verbundene Betätigungselement eingehängt wird, so dass die Betätigungsstange beim Wechsel der Verstelleinrichtung durch Ausüben einer Zugkraft auf die Antriebsachse auch eingehängt bleibt, wohingegen Sie bei Ausüben einer Druckkraft zum Wechsel der Verstelleinrichtung aus der Einhängung in das Betätigungselement herausspringen kann und gegebenenfalls wieder mühsam eingehängt werden müsste.

Darüber hinaus wird bei dieser Vorspannung das Gewicht einer in das Betätigungselement eingehängten Kurbelstange aufgenommen, mit der der Beleuchter die Antriebsachse dreht und damit die jeweils eingestellte Verstelleinrichtung betätigt.

In bevorzugter Ausführungsform wird die auf eine Zugkraftbetätigung vorgespannte Antriebsachse durch eine zwischen einem Bund der Antriebsachse oder des Rastelements und der gehäusefesten Hülse oder dem die Antriebsachse aufnehmenden Gehäuseabschnitt angeordnete Vorspannfeder vorgespannt.

Vorzugsweise enthalten die Schwenk- und Neigeeinrichtung ein selbsthemmendes Getriebe und/oder eine Bremseinrichtung, die ein über die Kupplung übertragenes antriebsseitiges Drehmoment zur vertikalen Schwenk- oder horizontalen Neigeachse überträgt, ein von der vertikalen Schwenk- oder horizontalen Neigeachse bzw. vom Scheinwerfer ausgehendes Drehmoment aber blockiert, so dass eine einmal eingestellte Schwenk- oder Neigestellung des Scheinwerfers auch beim Auskuppeln des Umschaltgetriebes oder beim Einwirken äußerer Kräfte auf den Scheinwerfer erhalten bleibt.

Die abtriebsseitige Verbindung der Kupplung mit der Neigeeinrichtung erfolgt in einer Ausführungsform über ein mit der horizontalen Neigeachse des Haltebügels verbundenes Schneckenrad und eine mit dem Schneckenrad kämmende Schnecke mit einer Längsbohrung, durch die die Antriebsachse gesteckt ist.

Die abtriebsseitige Verbindung der Schwenkeinrichtung mit der Kupplung erfolgt in einer Ausführungsform über eine mit der vertikalen Schwenkachse des Haltebügels über Getriebeelemente, insbesondere über eine Schneckenverzahnung, verbundene flexible Welle, die form- oder kraftschlüssig mit der ersten Kupplungshülse verbunden ist.

In bevorzugter Ausführungsform besteht der Antrieb aus einer Betätigungsglocke mit im Innenraum ausgebildeten Formschlusselementen und einem an der Außenfläche ausgebildeten Betätigungsprofil und ist zum Betätigen der Neigeeinrichtung gegen die Vorspannung der Kupplung und/oder Antriebesachse axial verstellbar.

Anhand eines in der Zeichnung dargestellten Ausführungsbeispieles soll der der Erfindung zugrunde liegende Gedanke näher erläutert werden. Es zeigen:
- Fig. 1: eine Seitenansicht eines Haltebügels für einen Scheinwerfer mit einer ein- zelnen, mit einem Umschaltgetriebe verbundenen Betätigungseinrichtung am Ende eines Bügelarms;
- Fig. 2: eine teilweise geschnittene, isometrische Darstellung des Umschaltgetrie- bes;
- Fig. 3: eine teilweise geschnittene Seitenansicht des Umschaltgetriebes bei einer Kopplung des Antriebs mit der Schwenkeinrichtung;
- Fig. 4: eine teilweise geschnittene Seitenansicht des Umschaltgetriebes bei einer Kopplung des Antriebs mit der Neigeeinrichtung;
- Fig. 5: eine teilweise geschnittene, isometrische Darstellung des Umschaltgetrie- bes mit einer ersten Variante eines Rastmechanismus;
- Fig. 6: eine teilweise geschnittene Seitenansicht des Umschaltgetriebes gemäß Fig. 5 und
- Fig. 7 bis 9: eine schematische Darstellung verschiedener Phasen beim Betätigen ei- ner als Kugelmechanik ausgebildeten zweiten Variante eines Rastmecha- nismus für das Umschaltgetriebe.

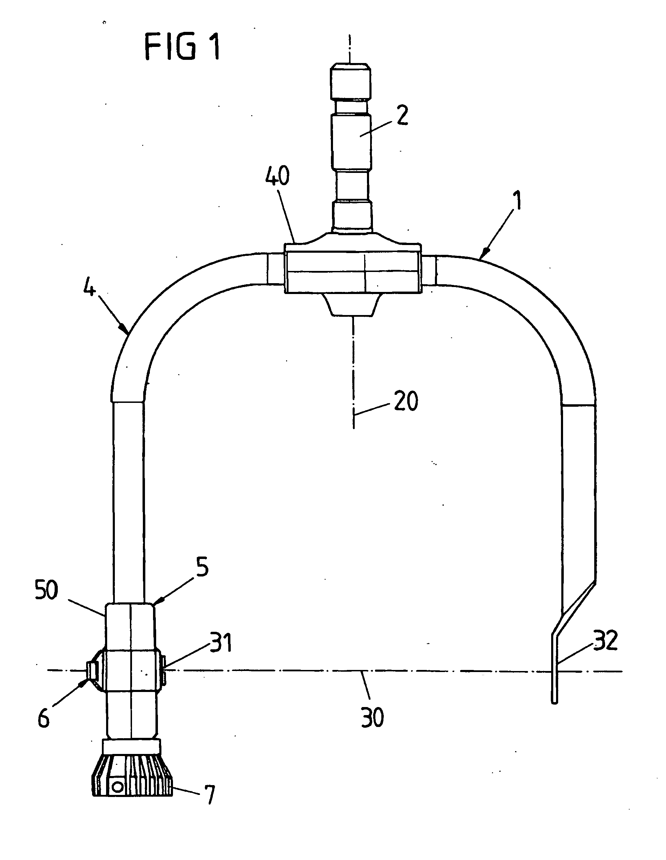

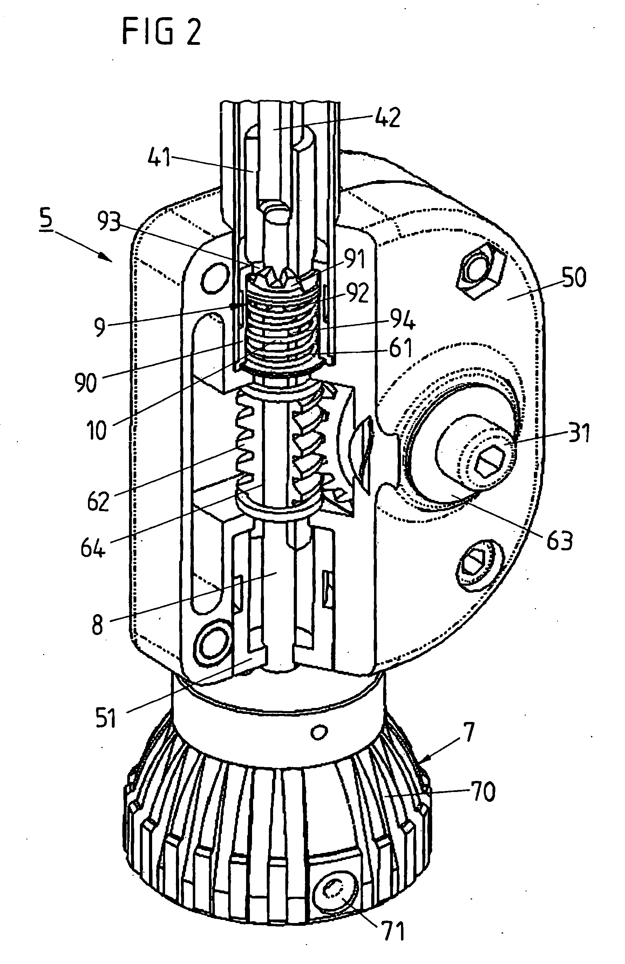

Fig. 1 zeigt einen Haltebügel 1 für einen Scheinwerfer, der mit diametral zueinander angeordneten Befestigungen mit an den Enden des Haltebügels 1 angeordneten Aufnahmen 31, 32 verbunden wird. Der Haltebügel 1 kann über einen Verbindungsbolzen 2 mit einer Tragevorrichtung, beispielsweise mit der Traverse eines Riggs für die hängende Anordnung des Scheinwerfers oder mit einem Stativ verbunden werden. Zwischen den Bügelarmen des Haltebügels 1 und dem Befestigungsbolzen 2 ist vorzugsweise in der Symmetrieachse des Haltebügels 1 ein Gehäuse 40 angeordnet, das ein Getriebe einer Schwenkeinrichtung 4 umgibt, mit der der Haltebügel 1 um eine durch den Befestigungsbolzen 2 gehende vertikale Achse 20 drehbar ist. Am Ende des einen Bügelarms des Haltebügels 2 ist ein Gehäuse 50 angeordnet, das ein in den Fig. 2 bis 4 näher dargestelltes Umschaltgetriebe 5 sowie das Getriebe einer Neigeeinrichtung 6 umgibt, dessen Abtrieb die Aufnahme 31 betätigt und ein Kippen bzw. Neigen des Scheinwerfers um eine horizontale Achse 30 ermöglicht.

Zum Betätigen der Schwenkeinrichtung 4 und der Neigeeinrichtung 6 ist eine Betätigungsglocke 7 vorgesehen, die zur besseren Handhabung gemäß Fig. 2 eine Betätigungsprofil 70 an ihrer Außenfläche aufweist und einen Querstift 71 und/oder Formschlusselemente im Innern ausbildet, die mit entsprechenden Gegen-Formschlusselementen am Ende einer Betätigungsstange zu verbinden sind, wenn der Haltebügel 1 entfernt von einer Bedienungsperson angeordnet ist.

Zum Umschalten von der Schwenkeinrichtung 4 zur Neigeeinrichtung 6 und umgekehrt wird die Betätigungsglocke 7 in Richtung der axialen Verlängerung des einen Bügelarms verstellt, d.h. gedrückt oder vorzugsweise gezogen. In der dargestellten Ausführungsform ist die Betätigungsglocke 7 in einer nicht ausgezogenen Ruhestellung mit der Schwenkeinrichtung 4 gekoppelt, während sie zur Betätigung der Neigeeinrichtung 6 in Richtung der Verlängerung des Haltebügelarms vorzugsweise entgegen einer Vorspannkraft verstellt werden muss.

Fig. 2 zeigt in teilweise geschnittener perspektivischer Ansicht ein erstes Ausführungsbeispiel der erfindungsgemäßen Lösung mit dem in dem Getriebegehäuse 50 angeordneten Umschaltgetriebe 5, das die Betätigungsglocke 7 wahlweise mit der Schwenkeinrichtung 4 oder mit der Neigeeinrichtung 6 gemäß Fig. 1 verbindet.

Das Umschaltgetriebe 5 enthält eine mit der Betätigungsglocke 7 verbundene Antriebsachse 8, an deren der Betätigungsglocke 7 entgegen gesetztem Ende in entgegengesetzte Richtungen ausgerichtete erste und zweite Kupplungselemente 91, 92 einer Kupplung 9 angeordnet sind. Die entgegengesetzt zueinander ausgerichteten Kupplungselemente 91, 92 wirken je nach Stellung der Antriebsachse 8 mit einem ihnen zugeordneten ersten und zweiten Gegen-Kupplungselement 93, 94 zur Kraftübertragung von der Antriebsglocke 7 über die Antriebsachse 8 auf die Schwenkeinrichtung 4 oder die Neigeeinrichtung 6 zusammen.

Die Kupplung 9 enthält weiterhin eine Vorspannfeder 10, die an einer die Kupplung 9 umgebenden Kupplungsbuchse 90 und an den Kupplungselementen 91, 92 abgestützt und als Druckfeder ausgebildet ist, die das erste Kupplungselement 91 in formschlüssigen Eingriff mit dem ersten Gegen-Kupplungselement 93 bringt, d.h. die Betätigungsglocke 7 mit der Schwenkeinrichtung 4 koppelt.

Die Gegen-Kupplungselemente 93, 94 sind an den einander zugewandten Enden zweier Kupplungshülsen 41, 61 angeordnet, wobei die das erste Gegen-Kupplungselement 93 enthaltende erste Kupplungshülse 41 Teil des Getriebes der Schwenkeinrichtung 4 ist, während die das zweite Gegen-Kupplungselement 94 an ihrem Ende ausbildende zweite Kupplungshülse 61 als Antriebselement der Neigeeinrichtung 6 dient.

Die erste Kupplungshülse 41 der Schwenkeinrichtung 4 ist form- oder kraftschlüssig mit einer flexiblen Welle 42 verbunden, die im Innern des einen Haltebügelarms bis zu einem vom Gehäuse 40 umgebenen Getriebe der Schwenkeinrichtung 4 verläuft.

Die zweite Kupplungshülse 61 ist fest mit einer Schnecke 62 verbunden, die mit einem Schneckenrad 63 kämmt, in dessen Drehachse die Aufnahme 31 für den Scheinwerfer ausgebildet ist.

Die Getriebe der Schwenk- und Neigeeinrichtung 4, 6 können beliebig ausgebildet werden, sind aber vorzugsweise selbsthemmend oder mit einer Bremseinrichtung verbunden, die ein über die Kupplung übertragenes antriebsseitiges Drehmoment zur vertikalen Schwenkachse 20 oder horizontalen Neigeachse 30 überträgt, ein von der vertikalen Schwenkachse 20 oder horizontalen Neigeachse 30 bzw. vom Scheinwerfer ausgehendes Drehmoment aber blockiert, so dass eine einmal eingestellte Schwenk- oder Neigestellung des Scheinwerfers auch beim Auskuppeln des Umschaltgetriebes 5 oder beim Einwirken äußerer Kräfte auf den Scheinwerfer erhalten bleibt.

Die Antriebsachse 8 ist durch eine Längsbohrung 64 der Schnecke 62 geführt und durch die Längsbohrung der zweiten Kupplungshülse 61 gesteckt und über die Kupplung 9 hinaus mit einem verlängerten Abschnitt in der Bohrung der ersten Kupplungshülse 41 abgestützt. Durch eine an die Betätigungsglocke 7 anschließende Lagerbuchse 51 im Gehäuse 50 des Umschaltgetriebes 5 ist die Antriebsachse 8 somit über ihre gesamte Länge im Umschaltgetriebe 5 geführt und gewährleistet somit ein verkantungsfreies Übertragen der Antriebskraft von der Betätigungsglocke 7 zur Schwenkeinrichtung 4 oder Neigeeinrichtung 6.

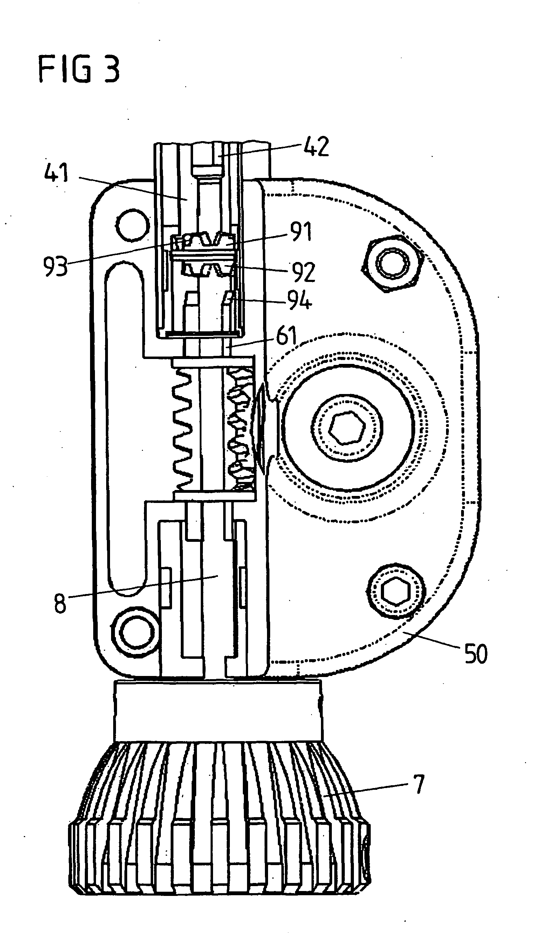

Fig. 3 zeigt in einer geschnittenen Seitenansicht die Positionierung der Betätigungsglocke 7 und damit der Antriebsachse 8 und der Kupplung 9 in der Ruhestellung des Umschaltgetriebes 5, in der die Vorspannfeder 10 das erste Kupplungselement 91 in formschlüssigen Eingriff mit dem ersten Gegen-Kupplungselement 93 am Ende der ersten Kupplungshülse 41 bringt, die über die flexible Welle 42 mit dem Getriebe der Schwenkeinrichtung 4 verbunden ist.

Fig. 3 zeigt den Verzahnungseingriff des ersten Kupplungselements 91 mit dem ersten Gegen-Kupplungselement 93, während das zweite Kupplungselement 92 von dem ihm zugeordneten zweiten Gegen-Kupplungselement 94 entfernt und somit außer Eingriff ist. Durch Drehen der Betätigungsglocke 7 in der einen oder anderen Drehrichtung wird eine Antriebskraft auf die Schwenkeinrichtung 4 ausgeübt, die ein Verdrehen des Haltebügels 1 gemäß Fig. 1 in der einen oder anderen Richtung um die vertikale Schwenkachse 20 bewirkt.

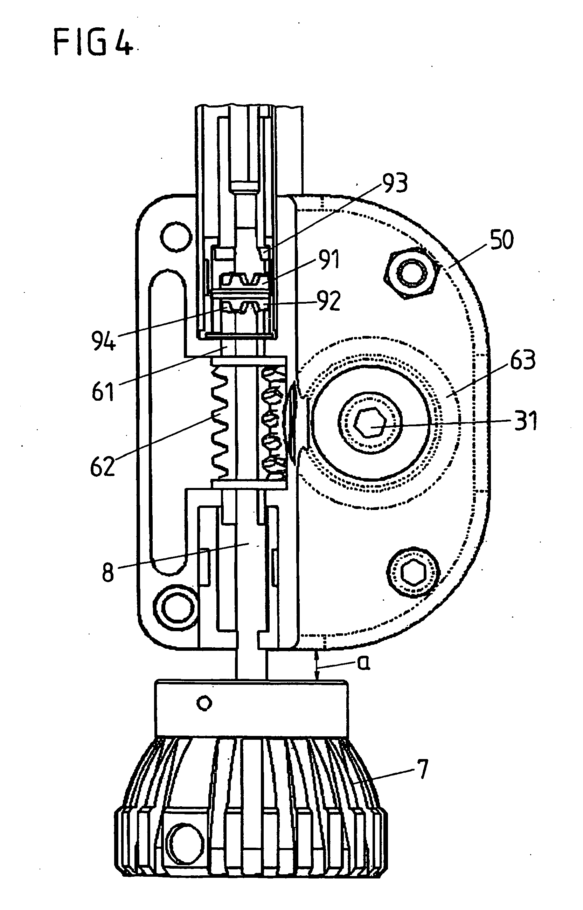

Fig. 4 zeigt das Umschaltgetriebe 5 bei einer Kopplung der Betätigungsglocke 7 mit der Neigeeinrichtung 6. In dieser Stellung ist die Betätigungsglocke 7 entgegen der Vorspannkraft der Vorspannfeder 10 gezogen und befindet sich in einem Abstand a vom Gehäuse 50 des Umschaltgetriebes 5. In dieser Position greift das zweite Kupplungselement 92 der Kupplung 9 in das zweite Gegen-Kupplungselement 94 am Ende der zweiten Kupplungshülse 61 ein, die starr mit der Schnecke 62 verbunden ist, die mit dem Schneckenrad 63 kämmt und beim Betätigen der Betätigungsglocke 7 in der einen oder anderen Drehrichtung ein Neigen bzw. Kippen des Scheinwerfers um die horizontale Achse 30 gemäß Fig. 1 bewirkt.

In den Fig. 2 bis 4 sind die Kupplungselemente 91, 92 und Gegen-Kupplungselemente 93, 94 als trapezförmige Klauen dargestellt, können in alternativer Ausführung aber auch als Klauen-, Keilwellen-, Kerbverzahnungs-, Stirnverzahnungs-, polygones Vielkant-, Passfederprofil ausgebildet oder mit einem Reibbelag versehen werden.

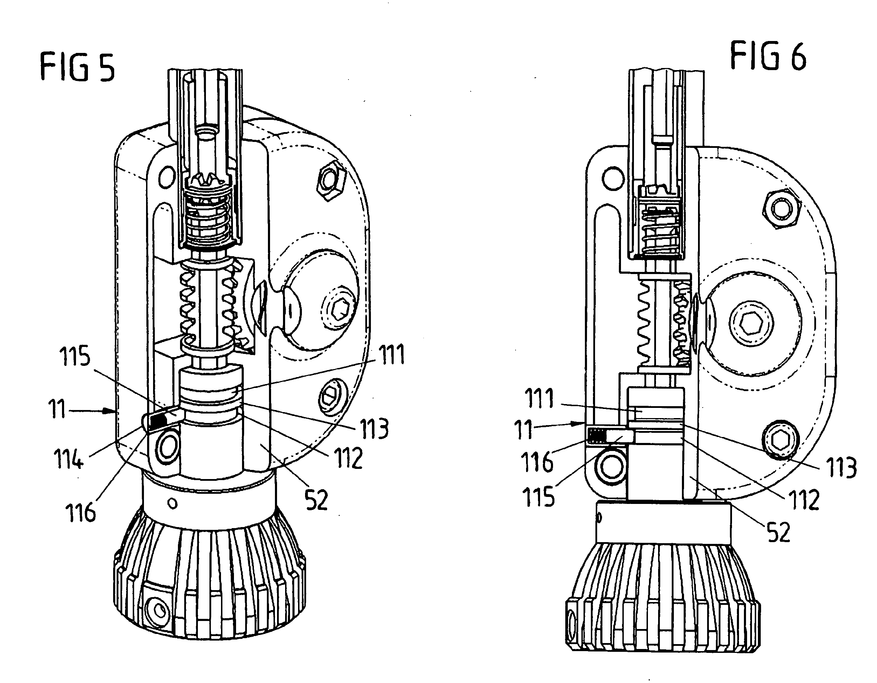

In den Fig. 5 und 6 ist eine zweite Ausführungsform des erfindungsgemäßen Umschaltgetriebes in teilweise geschnittener perspektivischer Ansicht (Fig. 5) und in einer teilweise geschnitten Seitenansicht (Fig. 6) dargestellt, die einen Rastmechanismus 11 zum Festlegen der Antriebsachse 8 in einer ersten oder zweiten axialen Stellung zum Betätigen der Schwenk- oder Neigeeinrichtung 4, 6 enthält. Soweit die in den Fig. 5 und 6 verwendeten Bezugsziffern für Funktionselemente des Umschaltgetriebes mit den Bezugsziffern für Funktionselemente des vorstehend anhand der Fig. 1 bis 4 beschriebenen Ausführungsbeispiels übereinstimmen, wird auf die vorstehende Beschreibung des Aufbaus, der Zuordnung und Funktion dieser Funktionselemente Bezug genommen.

Der Rastmechanismus 11 weist zwei als axial zueinander beabstandete, umlaufende Nuten der Antriebsachse 8 ausgebildete Rastaufnahmen 111, 112 auf, die durch einen Trennsteg 113 voneinander getrennt sind. Als Gegen-Rastelement, das mit den Rastaufnahmen 111, 112 zusammenwirkt, ist in dem die Antriebsachse 8 umgebenden Gehäuseabschnitt 52 ein in einer Radialbohrung 114 angeordneter Raststift 115 vorgesehen, der mittels eines als Druckfeder ausgebildeten Federelements 116 radial in Richtung auf die Rastaufnahmen 111, 112 vorgespannt ist. Um einerseits einen Wechsel der Antriebsachse von der einen axialen Stellung in die andere axiale Stellung zum Wechsel der Betätigung der Verstelleinrichtungen zu erleichtern, andererseits aber einen festen Formschluss zwischen dem Raststift 115 und den Rastaufnahmen 111, 112 in der einen oder anderen axialen Stellung zu gewährleisten, weisen die miteinander in Eingriff stehenden Formschlussteile des Raststifts 115 und der Rastaufnahme 111, 112 eine wechselseitig angepasste Form auf, zu der beispielsweise Anlaufschrägen des Zwischensteges 113 gehören können.

Die in dieser Ausführungsform vorgesehene Vorspannfeder 10 kann entfallen, da der Rastmechanismus 11 durch den axialen Abstand der Rastaufnahme 111, 112 einen sicheren Eingriff der ersten oder zweiten Kupplungselemente und Gegen-Kupplungselement 91 bis 94 sicherstellt. Eine zusätzlich angeordnete Vorspannfeder kann daher so ausgelegt werden, dass sie Toleranzen der Kupplungselemente und Gegen-Kupplungselemente bzw. der Rastelemente des Rastmechanismus 11 ausgleicht.

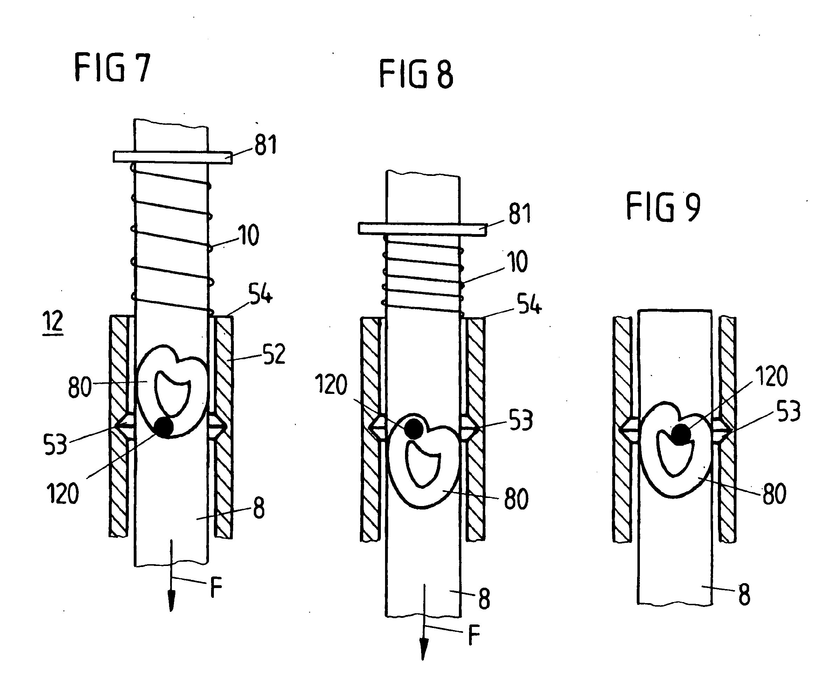

Anstelle des in den Fig. 5 und 6 dargestellten Rastmechanismus 11 kann in einer weiteren Ausführungsform des erfindungsgemäßen Umschaltgetriebes eine Kugelmechanik vorgesehen werden, deren Funktionselemente schematisch in den Fig. 7 bis 9 in drei verschiedenen Bewegungsphasen der Kugelmechanik 12 dargestellt sind.

Die dem Aufbau und der Funktion einer Kugelschreibermechanik entsprechende Kugelmechanik 12 setzt sich aus einer umlaufenden Innenaussparung 53 in einem die Antriebsachse 8 führenden Gehäuseabschnitt 52 des Gehäuses 50 des Umschaltgetriebes 5, einer herzförmigen Leitkurven-Aussparung 80 am Umfang der Antriebsachse 8 und einer sowohl in der herzförmigen Leitkurven-Aussparung 80 als auch in der umlaufenden Innenaussparung 53 geführten Kugel 120 zusammen. Die Kugelmechanik 12 bewirkt, dass durch ausschließliches Ausüben einer Druckkraft oder einer Zugkraft auf die Antriebsachse 8 über die Betätigungsglocke 7 gemäß den Fig. 2 bis 6 automatisch ein Wechsel der Kupplung der ersten und zweiten Kupplungselemente und Gegen-Kupplungselemente erfolgt und damit die Betätigung der einen oder anderen Verstelleinrichtung ermöglicht.

Durch Festlegen der Art der Vorspannung der Antriebsachse 8 kann vorgegeben werden, ob zur Betätigung der Antriebsachse 8 und damit zum Wechsel der Verstelleinrichtung eine Druckkraft oder eine Zugkraft erforderlich ist.

Bei der in den Fig. 7 bis 9 in drei Bewegungsphasen schematisch dargestellten Kugelmechanik 12 ist die Antriebsachse 8 so vorgespannt, dass durch Aufbringung einer Zugkraft F in Richtung des in den Fig. 7 und 8 eingetragenen Pfeils ein Wechsel der Verstelleinrichtungen erfolgt, was den Vorteil hat, dass eine in die Betätigungsglocke eingehängte Kurbelstange zum Umschalten und Betätigen der Schwenkeinrichtung oder der Neigeeinrichtung beim Wechsel der Verstelleinrichtung durch Ausüben einer Zugkraft auf die Betätigungsglocke und damit auf die Antriebsachse auch eingehängt bleibt, wohingegen Sie bei Ausüben einer Druckkraft zum Wechsel der Verstelleinrichtung aus der Einhängung in der Betätigungsglocke herausspringen könnte und wieder mühsam eingehängt werden müsste.

Zu diesem Zweck ist zwischen einem Bund 81 der Antriebsachse 8 und einer Anlagefläche 54 des die Antriebsachse 8 umgebenden Gehäuseabschnitts 52 eine Druckfeder 10 als Vorspannfeder angeordnet. Diese Vorspannfeder 10 übt nicht nur eine entsprechende Vorspannkraft auf die Antriebsachse 8 aus, sondern ist zusätzlich in der Lage, das Gewicht der in die Betätigungsglocke 7 eingehängten Kurbelstange aufzunehmen, mit der der Beleuchter die Antriebsachse 8 dreht und damit die jeweils eingestellte Verstelleinrichtung betätigt.

In der in Fig. 7 dargestellten Ausgangsstellung der Kugelmechanik 12 befindet sich die Kugel 120 in einem unteren Rastpunkt zwischen der herzförmigen Leitkurven-Aussparung 80 und der umlaufenden Innenaussparung 53 des die Antriebsachse 8 umgebenden Gehäuseabschnitts 52. Beim Ausüben einer Zugkraft F auf die Antriebsachse 8 in Richtung des in Fig. 7 eingetragenen Pfeils rollt die Kugel 120 entgegen der Wirkung der Vorspannfeder 10 im Uhrzeigersinn in der herzförmigen Leitkurven-Aussparung 80 und wird dabei durch die Innenaussparung 53 in dem Gehäuseabschnitt 52 in gleicher Höhe gehalten. Durch ihre Lage innerhalb der herzförmigen Leitkurven-Aussparung 80 wird dabei die Stellung des Endes der Antriebsachse 8 und damit der Eingriff des ersten Kupplungselements 91 in das erste Gegen-Kupplungselement 93 oder des zweiten Kupplungselements 92 in das zweite Gegen-Kupplungselement 94 bestimmt.

Über die in Fig. 8 dargestellte Zwischenstellung in der sich die Kugel 120 am oberen Ende der herzförmigen Leitkurven-Aussparung 80 befindet, gelangt die in der herzförmigen Leitkurven-Aussparung 80 und der umlaufenden Innenaussparung 53 geführte Kugel 120 in den in Fig. 9 dargestellten oberen Rastpunkt der herzförmigen Leitkurven-Aussparung 80 und wird in dieser Position durch den Druck der Vorspannfeder 10 gehalten, so dass sich die Antriebsachse 8 in ihrer zweiten stabilen axialen Stellung befindet.

Während beispielsweise in der in Fig. 7 dargestellten Stellung der Antriebsachse 8 das erste Kupplungselement 91 mit dem ersten Gegen-Kupplungselement 93 in Eingriff steht, so dass die Schwenkeinrichtung 4 aktiviert ist und in gewünschter Richtung verstellt werden kann, befindet sich bei der in Fig. 9 schematisch dargestellten zweiten stabilen axialen Stellung der Antriebsachse 8 das zweite Kupplungselement 92 in Eingriff mit dem zweiten Gegen-Kupplungselement 94, so dass die Neigungseinrichtung aktiviert ist und in der gewünschten Richtung verstellt werden kann.

Durch erneutes Ausüben einer Zugkraft auf die Antriebsachse 8 wird die Kugel 120 erneut in den in Fig. 7 dargestellten unteren Rastpunkt der herzförmigen Leitkurven-Aussparung 80 verlagert, in der die Kugelmechanik 12 die Antriebsachse 8 in ihrer ersten stabilen axialen Stellung fixiert, die das erste Kupplungselement 91 mit dem ersten Gegen-Kupplungselement 93 in Eingriff bringt und damit ein Betätigen der Schwenkeinrichtung ermöglicht.

Alternativ zu der in den Fig. 7 bis 9 schematisch dargestellten Kugelmechanik kann ein entsprechend funktionierender Rastmechanismus vorgesehen werden, beispielsweise ein als "Securit-Mechanik" bekannter Rastmechanismus, der analog zu der vorstehend anhand der Fig. 7 bis 9 beschriebenen Kugelmechanik bei Ausüben einer Zug- oder Druckkraft auf die Antriebsachse 8 einen Wechsel der axialen Stellung der Antriebsachse 8 vornimmt und damit abwechselnd ein Betätigen der Schwenk- oder Neigeeinrichtung 4 bzw. 6 bewirkt.

### Bezugszeichenliste

- 1: Haltebügel
- 2: Befestigungsbolzen
- 4: Schwenkeinrichtung
- 5: Umschaltgetriebe
- 6: Neigeeinrichtung
- 7: Betätigungsglocke
- 8: Antriebsachse
- 9: Kupplung
- 10: Vorspannfeder
- 11: Rastmechanismus
- 12: Kugelmechanik
- 20: Vertikale Schwenkachse
- 30: Horizontale Neigeachse
- 31, 32: Aufnahmen
- 40: Gehäuse
- 41: erste Kupplungshülse
- 42: Flexible Welle
- 50: Gehäuse
- 51: Lagerbuchse
- 52: Gehäuseabschnitt
- 53: Innenaussparung
- 54: Anlagefläche
- 61: zweite Kupplungshülse
- 62: Schnecke
- 63: Schneckenrad
- 64: Längsbohrung
- 70: Betätigungsprofil
- 71: Querstift
- 80: Leitkurven-Aussparung
- 81: Bund
- 91: Erstes Kupplungselement
- 92: Zweites Kupplungselement
- 93: Erstes Gegen-Kupplungselement
- 94: Zweites Gegen-Kupplungselement
- 111, 112: Raststiftaufnahmen (Nuten)
- 113: Trennsteg
- 114: Radialbohrung
- 115: Raststift
- 116: Federelement
- 120: Kugel

## Patentansprüche

1. Vorrichtung zum Schwenken eines Scheinwerfers um eine vertikale Achse (20) und Verstellen der Neigung des Scheinwerfers um eine horizontale Achse (30) mit einem um die vertikale Achse (20) schwenkbaren Haltebügel (1) mit zwei Bügelarmen, an deren Enden Aufnahmen (31, 32) für das Gehäuse des Scheinwerfers angeordnet sind, die die horizontale Achse (30) zum Verstellen der Neigung des Scheinwerfers bilden, wobei in einem Gehäuse (50) am Ende des einen Bügelarms des Haltebügels (1) ein Umschaltgetriebe (5) angeordnet ist, das eine axial verstellbare Antriebsachse (8) aufweist, die mit einem mittels einer Betätigungsstange verstellbaren Antrieb (7) zum Betätigen einer den Haltebügel (1) und Scheinwerfer um die vertikale Achse (20) drehenden Schwenkeinrichtung (4) und einer den Haltebügel (1) und Scheinwerfer um die horizontale Achse (30) kippenden Neigeeinrichtung (6) in Richtung der axialen Verlängerung des Bügelarms und die mit einer Kupplung (9) verbunden ist, die den Antrieb (7) mit der Schwenkeinrichtung (4) oder mit der Neigeeinrichtung (6) koppelt,
**dadurch gekennzeichnet,**
**dass** die Antriebsachse (8), die Kupplung (9) und die mit der Kupplung (9) koppelbaren Teile der Schwenkeinrichtung (4) und der Neigeeinrichtung (6) axial fluchtend zueinander angeordnet sind.

2. Umschaltgetriebe nach Anspruch 1, **dadurch gekennzeichnet, dass** die Kupplung (9) koaxial zur Antriebsachse (8) angeordnete Kupplungselemente (91 - 94) aufweist, von denen in Abhängigkeit von der axialen Stellung der Antriebsachse (8) ein erstes Kupplungselement (91) mit einem mit der Schwenkeinrichtung (4) verbundenen ersten Gegen-Kupplungselement (93) oder ein zweites Kupplungselement (92) mit einem mit der Neigeeinrichtung (6) verbundenen zweiten Gegen-Kupplungselement (94) verbunden ist.

3. Umschaltgetriebe nach Anspruch 1 oder 2, **dadurch gekennzeichnet, dass** die Kupplungselemente (91, 92) und Gegen-Kupplungselemente (93, 94) form- oder reibschlüssig ineinander greifen und kreisscheibenförmig mit axial ausgerichtetem Klauen-, Keilwellen-, Kerbverzahnungs-, Stirnverzahnungs-, polygonem Vielkant- oder Passfederprofil oder Reibbelag ausgebildet sind.

4. Umschaltgetriebe nach mindestens einem der vorangehenden Ansprüche, **dadurch gekennzeichnet, dass** erste und zweite Gegen-Kupplungselemente (93, 94) an den einander zugewandten Enden einer mit der Schwenkeinrichtung (4) verbundenen ersten Kupplungshülse (41) und einer mit der Neigeeinrichtung (6) verbundenen zweiten Kupplungshülse (61) angeordnet sind und eine axial durch zumindest eine der Kupplungshülsen (41, 61) verlaufende Bohrung die Antriebsachse (8) aufnimmt.

5. Umschaltgetriebe nach Anspruch 3 oder 4, **dadurch gekennzeichnet, dass** die Antriebsachse (8) durch die Bohrung der mit der Neigeeinrichtung (6) verbundenen zweiten Kupplungshülse (61) gesteckt und in der Bohrung der mit der Schwenkeinrichtung (4) verbundenen ersten Kupplungshülse (41) abgestützt ist.

6. Umschaltgetriebe nach mindestens einem der vorangehenden Ansprüche, **dadurch gekennzeichnet, dass** die Kupplung (9) und/oder die Antriebsachse (8) in Richtung auf einen Eingriff der Kupplungs- und Gegen-Kupplungselemente (91, 93) der Schwenkeinrichtung (4) vorgespannt ist bzw. sind.

7. Umschaltgetriebe nach Anspruch 6, **dadurch gekennzeichnet, dass** eine Vorspannfeder (10) an einer die Kupplung (9) umgebenden Kupplungsbuchse (90) oder einem Gehäuse und an den Kupplungselementen (91, 92) abgestützt ist.

8. Umschaltgetriebe nach mindestens einem der vorangehenden Ansprüche, **dadurch gekennzeichnet, dass** die Antriebsachse (8) mit einem Rastmechanismus (11, 12) verbunden ist, der die Antriebsachse (8) in einer ersten axialen Stellung, in der das erste Kupplungselement (91) mit dem ersten Gegen-Kupplungselement (93) gekoppelt ist, und in einer zweiten axialen Stellung, in der das zweite Kupplungselement (92) mit dem zweiten Gegen-Kupplungselement (94) gekoppelt ist, fixiert.

9. Umschaltgetriebe nach Anspruch 8, **dadurch gekennzeichnet, dass** der Rastmechanismus (11) einen radial vorgespannten und radial ausgerichteten Raststift (115) enthält, der in eine von zwei axial zueinander versetzte Raststiftaufnahmen (111, 112) eingreift, die aus um die Antriebsachse (8) umlaufenden Nuten bestehen, die axial durch einen Trennsteg (113) voneinander getrennt sind.

10. Umschaltgetriebe nach Anspruch 8, **dadurch gekennzeichnet, dass** der Rastmechanismus (12) beim axialen Verstellen der Antriebsachse (8) die Antriebsachse (8) abwechselnd in der ersten oder zweiten axialen Stellung festlegt.

11. Umschaltgetriebe nach Anspruch 10, **dadurch gekennzeichnet, dass** der Rastmechanismus aus einer Kugelmechanik (12) nach Art einer Kugelschreibermechanik besteht, die ein mit der Antriebsachse (8) verbundenes Rastelement mit einer herzförmigen Leitkurven-Aussparung, eine gehäusefeste Hülse mit einer umlaufenden Innenaussparung und eine in der herzförmigen Leitkurven-Aussparung des Rastelements und der umlaufenden Innenaussparung der gehäusefesten Hülse geführte Kugel enthält oder aus einer an der Antriebsachse (8) ausgebildeten, herzförmigen Leitkurven-Aussparung (80) einer in einem die Antriebsachse (8) aufnehmenden Gehäuseabschnitt (52) ausgebildeten, umlaufenden Innenaussparung (53) und einer in der herzförmigen Leitkurven-Aussparung (80) und der umlaufenden Innenaussparung (53) geführten Kugel (120) besteht.

12. Umschaltgetriebe nach einem der vorangehenden Ansprüche 8 bis 11, **dadurch gekennzeichnet, dass** die Antriebsachse (8) entgegen einer auf die Antriebsachse (8) ausgeübten Zugkraft mit einer zwischen einem Bund (81) der Antriebsachse (8) oder des Rastelements und der gehäusefesten Hülse oder dem die Antriebsachse (8) aufnehmenden Gehäuseabschnitt (52) angeordneten Vorspannfeder (100) vorgespannt ist.

13. Umschaltgetriebe nach mindestens einem der vorangehenden Ansprüche, **dadurch gekennzeichnet, dass** die Schwenk- und Neigeeinrichtung (4, 6) ein selbsthemmendes Getriebe enthalten.

14. Umschaltgetriebe nach mindestens einem der vorangehenden Ansprüche, **dadurch gekennzeichnet, dass** die Schwenk- und Neigeeinrichtung (4, 6) eine Bremseinrichtung enthalten, die ein über die Kupplung (9) übertragenes antriebsseitiges Drehmoment zur vertikalen Schwenkachse (20) oder horizontalen Neigeachse (30) überträgt, ein von der vertikalen Schwenk- oder horizontalen Neigeachse (20, 30) bzw. vom Scheinwerfer ausgehendes Drehmoment aber blockiert.

15. Umschaltgetriebe nach mindestens einem der vorangehenden Ansprüche, **dadurch gekennzeichnet, dass** die Neigeeinrichtung (6) ein mit der horizontalen Neigeachse (30) des Haltebügels (1) verbundenes Schneckenrad (63) und eine mit dem Schneckenrad (63) kämmende Schnecke (62) mit einer Längsbohrung (64) aufweist, durch die die Antriebsachse (8) gesteckt ist und die Schwenkeinrichtung (4) ein mit der vertikalen Schwenkachse (20) des Haltebügels (1) über Getriebeelemente verbundene flexible Welle (42) enthält, die form- oder kraftschlüssig mit der ersten Kupplungshülse (41) verbunden ist.

16. Umschaltgetriebe nach mindestens einem der vorangehenden Ansprüche, **dadurch gekennzeichnet, dass** der Antrieb aus einer Betätigungsglocke (7) mit im Innenraum ausgebildeten Formschlusselementen und/oder einem Querstift (71) und einem an der Außenfläche ausgebildeten Betätigungsprofil (70) besteht und zum Betätigen der Neigeeinrichtung (6) gegen die Vorspannung der Kupplung (9) und/oder der Antriebsachse (8) axial verstellbar ist.

## Claims

1. An apparatus for swivelling a spotlight about a vertical axis (20) and for adjusting the inclination of the spotlight about a horizontal axis (30) with a mounting bracket (1) pivotable about the vertical axis (20) with two bracket arms at whose ends receptacles (31, 32) are arranged for the housing of the spotlight, which form the horizontal axis (30) for adjusting the inclination of the spotlight, wherein in a housing (50) at the end of the one bracket arm of the mounting bracket (1) an adjusting gear mechanism (5) is arranged, which includes an axially adjustable drive axle (8) which is connected with a drive (7) adjustable by means of an actuating rod for actuating a swivelling means (4) rotating the mounting bracket (1) and the spotlight about the vertical axis (20) and a tilting means (6) tilting the mounting bracket (1) and the spotlight about the horizontal axis (30) in direction of the axial extension of the bracket arm and which is connected with a coupling (9) which couples the drive (7) with the swivelling means (4) or with the tilting means (6),
**characterized in**
**that** the drive axle (8), the coupling (9) and the parts of the swivelling means (4) and of the tilting means (6) to be coupled with the coupling (9) are arranged axially aligned with each other.

2. The adjusting gear mechanism according to claim 1, **characterized in that** the coupling (9) includes coupling elements (91 - 94) arranged coaxially with respect to the drive axle (8), of which in dependence on the axial position of the drive axle (8) a first coupling element (91) is connected with a first counter-coupling element (93) connected with the swivelling means (4) or a second coupling element (92) is connected with a second counter-coupling element (94) connected with the tilting means (6).

3. The adjusting gear mechanism according to claim 1 or 2, **characterized in that** the coupling elements (91, 92) and counter-coupling elements (93, 94) positively or frictionally engage in each other and are formed as circular disks with axially aligned claw, splined shaft, serrated, spur toothing, polygonal polyhedral or fitted key profile or friction lining.

4. The adjusting gear mechanism according to at least one of the preceding claims, **characterized in that** first and second counter-coupling elements (93, 94) are arranged at the ends facing each other of a first coupling sleeve (41) connected with the swivelling means (4) and of a second coupling sleeve (61) connected with the tilting means (6) and a bore extending axially through at least one of the coupling sleeves (41, 61) accommodates the drive axle (8).

5. The adjusting gear mechanism according to claim 3 or 4, **characterized in that** the drive axle (8) is put through the bore of the second coupling sleeve (61) connected with the tilting means (6) and is supported in the bore of the first coupling sleeve (41) connected with the swivelling means (4).

6. The adjusting gear mechanism according to at least one of the preceding claims, **characterized in that** the coupling (9) and/or the drive axle (8) is/are biased in direction of an engagement of the coupling and counter-coupling elements (91, 93) of the swivelling means (4).

7. The adjusting gear mechanism according to claim 6, **characterized in that** a biasing spring (10) is supported on a coupling bush (90) surrounding the coupling (9) or on a housing and on the coupling elements (91, 92).

8. The adjusting gear mechanism according to at least one of the preceding claims, **characterized in that** the drive axle (8) is connected with a latching mechanism (11, 12) which fixes the drive axle (8) in a first axial position in which the first coupling element (91) is coupled with the first counter-coupling element (93), and in a second axial position in which the second coupling element (92) is coupled with the second counter-coupling element (94).

9. The adjusting gear mechanism according to claim 8, **characterized in that** the latching mechanism (11) contains a radially biased and radially aligned latch pin (115) which engages in one of two axially offset latch pin receptacles (111, 112) which consist of grooves extending around the drive axle (8), which are axially separated from each other by a separating web (113).

10. The adjusting gear mechanism according to claim 8, **characterized in that** when axially adjusting the drive axle (8) the latching mechanism (12) alternately fixes the drive axle (8) in its first or second axial position.

11. The adjusting gear mechanism according to claim 10, **characterized in that** the latching mechanism consists of a ball mechanism (12) in the manner of a ball pen mechanism which contains a latching element with a heart-shaped lead cam recess, which is connected with the drive axle (8), a sleeve with a circumferential internal recess, which is fixed to the housing, and a ball guided in the heart-shaped lead cam recess of the latching element and in the circumferential internal recess of the sleeve fixed to the housing, or consists of a heart-shaped lead cam recess (80) formed on the drive axle of a circumferential internal recess (53) formed in a housing portion (52) accommodating the drive axle (8), and of a ball (120) guided in the heart-shaped lead cam recess (80) and in the circumferential internal recess (53).

12. The adjusting gear mechanism according to any of the preceding claims 8 to 11, **characterized in that** the drive axle (8) is biased against a tensile force exerted on the drive axle (8) by means of a biasing spring (100) arranged between a collar (81) of the drive axle (8) or the latching element and the sleeve fixed to the housing or the housing portion (52) accommodating the drive axle (8).

13. The adjusting gear mechanism according to at least one of the preceding claims, **characterized in that** the swivelling and tilting means (4, 6) contain a self-locking gear.

14. The adjusting gear mechanism according to at least one of the preceding claims, **characterized in that** the swivelling and tilting means (4, 6) contain a braking means which transmits a drive-side torque transmitted via the coupling (9) to the vertical swivel axis (20) or horizontal tilting axis (30), but blocks a torque proceeding from the vertical swivel or horizontal tilting axis (20, 30) and from the spotlight, respectively.

15. The adjusting gear mechanism according to at least one of the preceding claims, **characterized in that** the tilting means (6) includes a worm gear (63) connected with the horizontal tilting axis (30) of the mounting bracket (1) and a worm (62) meshing with the worm gear (63), which has a longitudinal bore (64) through which the drive axle (8) is put, and the swivelling means (4) contains a flexible shaft (42) connected with the vertical swivel axis (20) of the mounting bracket (1) via transmission elements, which shaft is positively or non-positively connected with the first coupling sleeve (41).

16. The adjusting gear mechanism according to at least one of the preceding claims, **characterized in that** the drive consists of an actuating bell (7) with form-fit elements formed in the interior and/or with a transverse pin (71) and an actuating profile (70) formed on the outer surface and is axially adjustable for actuating the tilting means (6) against the bias of the coupling (9) and/or the drive axle (8).

## Revendications

1. Dispositif pour faire pivoter un phare autour d'un axe vertical (20) et régler l'inclinaison du phare autour d'un axe horizontal (30) comprenant un arceau de maintien (1) capable de pivoter autour de l'axe vertical (20) et comportant deux bras d'arceau aux extrémités desquels sont agencés des récepteurs (31, 32) pour le boîtier du phare, qui forment l'axe horizontal (30) pour régler l'inclinaison du phare, dans lequel un mécanisme inverseur (5) est agencé dans un boîtier (50) à l'extrémité de l'un des bras d'arceau de l'arceau de maintien (1), mécanisme qui comporte un axe d'entraînement axialement réglable, lequel est relié à un entraînement (5) réglable au moyen d'une tige d'actionnement pour actionner un système de pivotement (4) qui fait tourner l'arceau de maintien (1) et le phare autour de l'axe vertical (20), et un système d'inclinaison qui fait basculer l'arceau de maintien (1) et le phare autour de l'axe horizontal (30), en direction du prolongement axial du bras d'arceau, et qui est relié à un accouplement (9) qui accouple l'entraînement (7) avec le système de pivotement (4) ou avec le système d'inclinaison (6),
**caractérisé en ce que**
l'axe d'entraînement (8), l'accouplement (9), et les pièces du système de pivotement (4) et du système d'inclinaison (6) qui peuvent être accouplées avec l'accouplement (9), sont agencés en alignement axial les uns avec les autres.

2. Dispositif à mécanisme inverseur selon la revendication 1, **caractérisé en ce que** l'accouplement (9) comprend des éléments d'accouplement (91-94) agencés coaxialement à l'axe d'entraînement (8), parmi lesquels, en fonction de la situation axiale de l'axe d'entraînement (8), soit un premier élément d'accouplement (91) est relié à un premier élément d'accouplement antagoniste (93) relié au système de pivotement (4), soit un second élément d'accouplement (92) est relié à un second élément d'accouplement antagoniste (94) relié au système d'inclinaison (6).

3. Dispositif à mécanisme inverseur selon la revendication 1 ou 2, **caractérisé en ce que** les éléments d'accouplement (91, 92) et les éléments d'accouplement antagonistes (93, 94) s'engagent les uns dans les autres par coopération de formes ou par coopération à friction, et sont réalisés en forme de disque circulaire avec un profil orienté axialement présentant des griffes, un arbre à cannelures, une denture à encoches, une denture frontale, une forme polygonale ou une clavette ajustée, ou présentant une garniture de friction.

4. Dispositif à mécanisme inverseur selon l'une au moins des revendications précédentes, **caractérisé en ce que** le premier et le second élément d'accouplement antagoniste (93, 94) sont agencés au niveau des extrémités tournées l'une vers l'autre d'une première douille d'accouplement (41) reliée au système de pivotement (4) et d'une seconde douille d'accouplement (61) reliée au système d'inclinaison (6), et **en ce qu'**un perçage s'étendant axialement à travers l'une au moins des douilles d'accouplement (41, 61) reçoit l'axe d'entraînement (8).

5. Dispositif à mécanisme inverseur selon la revendication 3 ou 4, **caractérisé en ce que** l'axe d'entraînement (5) est enfilé à travers le perçage de la seconde douille d'accouplement (61) reliée au système d'inclinaison (6), et est soutenu dans le perçage de la première douille d'accouplement (41) reliée au système de pivotement (4).

6. Dispositif à mécanisme inverseur selon l'une au moins des revendications précédentes, **caractérisé en ce que** l'accouplement (9) et/ou l'axe d'entraînement (8) est/sont précontraint(s) en direction d'un engagement des éléments d'accouplement et des éléments d'accouplement antagonistes (91, 93) du système de pivotement (4).

7. Dispositif à mécanisme inverseur selon la revendication 10, **caractérisé en ce qu'**un ressort de précontrainte (10) est soutenu sur l'une des douilles d'accouplement (90) qui entoure l'accouplement (9) ou sur un boîtier et sur les éléments d'accouplement (91, 92).

8. Dispositif à mécanisme inverseur selon l'une au moins des revendications précédentes, **caractérisé en ce que** l'axe d'entraînement (8) est relié à un mécanisme d'enclenchement (11, 12) qui fixe l'axe d'entraînement (8) dans une première position axiale dans laquelle le premier élément d'accouplement (91) est accouplé avec le premier élément d'accouplement antagoniste (93) et dans une seconde position axiale dans laquelle le second élément d'accouplement (92) est accouplé avec le second élément d'accouplement antagoniste (94).

9. Dispositif à mécanisme inverseur selon la revendication 8, **caractérisé en ce que** le mécanisme d'enclenchement (11) contient une tige d'enclenchement (115) précontrainte radialement et orientée radialement, qui s'engage dans un logement parmi deux logements de tige d'enclenchement (111, 112) décalés axialement l'un par rapport à l'autre, qui sont constitués par des gorges circonférentielles autour de l'axe d'entraînement (8) et qui sont séparées axialement l'une de l'autre par une barrette de séparation (113).

10. Dispositif à mécanisme inverseur selon la revendication 8, **caractérisé en ce que**, lors d'un déplacement axial de l'axe d'entraînement (8), le mécanisme d'enclenchement (12) immobilise l'axe d'entraînement (8) alternativement dans la première ou dans la seconde position axiale.

11. Dispositif à mécanisme inverseur selon la revendication 10, **caractérisé en ce que** le mécanisme d'enclenchement est constitué par un mécanisme à bille (12), à la manière d'un mécanisme de stylo à bille, qui contient un élément d'enclenchement, relié à l'axe d'entraînement (8), présentant un évidement à came de guidage en forme de coeur, une douille solidaire du boîtier avec un évidement intérieur périphérique, et une bille guidée par l'évidement à came de guidage en forme de coeur de l'élément d'enclenchement et par l'évidement intérieur périphérique de la douille solidaire du boîtier, ou qui est constitué par un évidement (80) à came de guidage en forme de coeur réalisé sur l'axe d'entraînement (8), par un évidement intérieur (53) périphérique réalisé dans un tronçon de boîtier (52) recevant l'axe d'entraînement (8), et par une bille (120) guidée dans l'évidement à came de guidage (8) en forme de coeur et par l'évidement intérieur périphérique (53).

12. Dispositif à mécanisme inverseur selon l'une des revendications 8 à 11, **caractérisé en ce que** l'axe d'entraînement (8) est précontraint, à l'encontre d'une force de traction exercée sur l'axe d'entraînement (8), au moyen d'un ressort de précontrainte (100) agencé entre une collerette (81) de l'axe d'entraînement (8) ou de l'élément d'enclenchement, et la douille solidaire du boîtier ou le tronçon de boîtier (52) qui reçoit l'axe d'entraînement (8).

13. Dispositif à mécanisme inverseur selon l'une au moins des revendications précédentes, **caractérisé en ce que** le système de pivotement et le système d'inclinaison (4, 6) contiennent un mécanisme à autoblocage.

14. Dispositif à mécanisme inverseur selon l'une au moins des revendications précédentes, **caractérisé en ce que** le système de pivotement et le système d'inclinaison (4, 6) contiennent un moyen de freinage qui transmet à l'axe de pivotement vertical (20) ou à l'axe d'inclinaison horizontal (30) un couple de rotation provenant de l'entraînement et transmis via l'accouplement (9), mais qui bloque un couple de rotation provenant de l'axe de pivotement vertical ou de l'axe d'inclinaison horizontal (20, 30) respectivement du phare.

15. Dispositif à mécanisme inverseur selon l'une au moins des revendications précédentes, **caractérisé en ce que** le système d'inclinaison (6) comprend une couronne de vis sans fin (63) reliée à l'axe d'inclinaison horizontal (30) de l'arceau de maintien (1), et une vis tangente (62), en engrènement avec la couronne (63), présentant un perçage longitudinal (64) à travers lequel est enfilé l'axe d'entraînement (8), et le système de pivotement (4) contient un arbre flexible (42), relié via des éléments de mécanisme à l'axe de pivotement vertical (20) de l'arceau de maintien (1), qui est relié par coopération de formes ou par coopération de forces avec la première douille d'accouplement (41).

16. Dispositif à mécanisme inverseur selon l'une au moins des revendications précédentes, **caractérisé en ce que** l'entraînement est constitué par une cloche d'actionnement (7) avec des éléments à coopération de formes réalisés dans l'espace intérieur et/ou par une tige transversale (71) et par un profil d'actionnement (70) réalisé sur la surface extérieure, et est déplaçable axialement pour actionner le système d'inclinaison (6) à l'encontre de la précontrainte de l'accouplement (9) et/ou de l'axe d'entraînement (8).
